Europäisches Patentamt

European Patent Office

Office européen des brevets

(11) Publication number: **0 072 591**
**B1**

(12) **EUROPEAN PATENT SPECIFICATION**

(45) Date of publication of patent specification: **28.05.86**

(21) Application number: **82200990.8**

(22) Date of filing: **05.08.82**

(51) Int. Cl.⁴: **C 08 F 10/00,** C 08 F 4/62

(54) **Process of preparing a catalyst component and polymerization of 1-alkenes with such a catalyst component.**

(30) Priority: **06.08.81 NL 8103704**

(43) Date of publication of application:
**23.02.83 Bulletin 83/08**

(45) Publication of the grant of the patent:
**28.05.86 Bulletin 86/22**

(84) Designated Contracting States:
**AT BE DE FR GB IT NL SE**

(56) References cited:
**DE-A-2 109 273**
**DE-A-2 457 968**
**GB-A-1 436 426**
**GB-A-1 552 700**

(73) Proprietor: **STAMICARBON B.V.**
**Mijnweg 1**
**NL-6167 AC Geleen (NL)**

(72) Inventor: **van de Leemput, Lambertus J. M. A.**
**Imkerstraat 16**
**NL-6101 GW Echt (NL)**
Inventor: **Nooijen, Godefridus Arnoldus H.**
**Gouv. Houbenstraat 16**
**NL-5981 BL Helden-Panningen (NL)**

(74) Representative: **De Boer, Jan et al**
**OCTROOIBUREAU DSM Postbus 9**
**NL-6160 MA Geleen (NL)**

Courier Press, Leamington Spa, England.

## Description

The invention relates to a process of preparing catalyst components containing titanium and/or vanadium and magnesium, for Ziegler-type catalysts for the polymerization of 1-alkenes, by contacting an inert organic support with successively an organomagnesium compound and one or more compounds of titanium and/or vanadium.

The invention relates also to the polymerization with such catalysts of 1-alkenes with 2—8 carbon atoms, optionally together with at most 20 mole % of one or more other 1-alkenes with 2—15 carbon atoms.

The use of such catalyst components is known from, for example, German Patent Application No. 21 09 273, where a support of silica, alumina or a mixture thereof is contacted with, successively, a hydrocarbyl magnesium or hydrocarbyl halogen magnesium or hydrocarbyl aluminium or hydrocarbyl halogen aluminium compound and with an excess amount of a halogen compound of a transition metal, such as, in particular, titanium or vanadium.

Further, from German Patent Application No. 2543219 a catalyst component is known which is obtained by contacting silica with a magnesium compound and subsequently reacting the product obtained with a titanium and/or vanadium compound.

From Dutch Patent Application No 7702323 also catalyst components are known which involve the contacting of support material with an aluminium halogen compound, an organomagnesium compound and a tetravalent titanium compound and/or a compound of another transition metal of group IV—VI in its highest valency, in that order.

Also, from German Patent Application No. 2457968 and from Dutch Patent Applications Nos. 7608303 and 7609030, processes of preparing supported titanium and magnesium catalyst components are known which involve the joint fluidization, in an inert gas stream and at a temperature of 150—1000°C, of a silica support and a water-free magnesium halide or magnesium alkoxide compound, and the subsequent incorporation of a titanium compound in the product thus obtained.

With all these catalyst components, the objective is to achieve the best possible activity (the polymer yield per gram of active ingredient of the catalyst component) besides suitable properties in the field of, in particular, molecular weight distributions and the particle size and particle size distribution of the polymer powders obtained.

Indeed, it has been found to be possible to achieve favourable polymer properties with the known catalyst components described above, but the activity of the catalysts concerned has proved not to be of particular interest. Also, it is known (c.f. R. Spitz et al., Eur. Pol. Journ. Vol. 15 pp. 441—444) that the activity of such known catalysts strongly decreases during the copolymerization of ethylene with 1-alkenes with 3—10 carbon atoms, in particular hexylene, and that during such a copolymerization considerable amounts of polymer waxes are produced, which cause serious problems on account of deposition on the reactor wall. It has now been found to be possible to prepare 1-alkene polymers with very good polymer, polymer powder and processing characteristics, with excellent yield, by polymerizing one or more 1-alkenes with catalyst components prepared by combining an inorganic support material with a solution of an organomagnesium compound, subsequently heating the reaction product obtained in a non-reducing atmosphere at a temperature of 300—1000°C, and then combining the support thus treated with one or more titanium and/or vanadium compounds or a solution thereof.

These new catalyst components of the invention are particularly suited for the preparation of polymers of 1-alkenes with 2—8 carbon atoms, optionally together with minor amounts of at most 10 mole % of one or more other 1-alkenes with 2—8 carbon atoms, and in particular for the preparation of ethylene polymers.

Totally unexpectedly, these new catalyst components of the invention were found to be suitable also for the copolymerization of mixtures of ethylene with at most 20 mole % of 1-alkenes with 3—12 carbon atoms, preferably hexylene or octene, linear low-density polyethylene being obtainable in good yields without there being a considerable deposition of polymer on the reactor wall.

It is generally known that the polymerization rate of alkenes with 3—12 carbon atoms is lower than that of ethylene. As a consequence, if ethylene is to be copolymerized with a particular mole percentage of such an alkene, there will have to be more, sometimes even considerably more of the alkene to be copolymerized with ethylene in the raction mixture. One of average skill in the art is familiar with this and will have little trouble in determining the desired proportions in the reaction mixture.

Research by Applicant has revealed that the heating treatment to which the product of the reaction between the support material and the magnesium compound(s) is subjected before it is contacted with the titanium and/or vanadium compound(s) has a very favourable effect on the properties of the catalyst or catalyst component obtained. It is assumed, but this statement must not be construed as committing Applicant, that by this heating treatment the linkage between the active ingredients of the catalyst component and the support material is changed, which is assumed to enhance the properties of the catalyst component obtained.

The support to be used in the process according to the present invention is preferably a porous inorganic support, e.g. an oxide or a salt. The nature of the support can influence the activity of the catalyst and the properties of the polymer. The support should be finely dispersed.

Particles larger than 200 microns will not normally be used. With too coarse support material, less favourable results are obtained, e.g. a low bulk density. The optimum particle size of the support material can easily be determined by experiment. By preference, a support is used which has a mean particle size of less than 100 microns. Although very fine support material can be used, on account of practical considerations a support having a particle size of at least 0.1 micron and in particular at least 1 micron will generally be used. If fine support material is used, the particle size of the polymer will generally be smaller than if coarser support material is used. An optimum particle size of the support can be established, for it has been found that, beyond a certain particle size, the polymer particle size will decrease.

Examples of suitable supports are oxides or hydroxides of magnesium or calcium silica, alumina, mixed silica/alumina, zirconium oxide, thorium oxide etc. Among the oxides, silica, alumina and mixed silca/alumina are preferred, and silica is most preferred. The silica is known in many different forms.

The particle size distribution of the support generally does not affect the activity of the catalyst, but it does affect the polymer, in particular the free flow properties thereof. It is desirable that the particle size distribution of the support be narrow, resulting in a correspondingly narrow particle size distribution of the polymer obtained.

If porous inorganic supports are used, these are preferably supports having a high internal porosity, that is, supports the pore volume of which constitutes a considerable portion of the volume of the particles. The internal porosity stands for the proportion of the pore volume to the material weight and is determined on the basis of the technique known by the name of BET, described by S. Braunauer, P. Emmett, E. Teller in Journal of the American Chemical Society, 60, pp. 209—319 (1938). For the present invention, particularly supports having an internal porosity of more than 0.6 cm$^3$/g are applicable. The porous supports used within the scope of the invention generally have a specific area of more than 50 m$^2$/g, usually in the order of magnitude of 150 to 500 m$^2$/g. These specific areas are measured in accordance with the above-mentioned technique of Braunauer, Emmett and Teller, using a standardized method such as the one described in British Standards BS 4359, Part 1 (1969). Before or after preparation, the silica can in a known manner be provided with other components such as fluorine, if desired. Also, compounds can be applied during or after the activation of the catalysts, if desired.

Since organometallic compounds react with water, the support should be dry. However, very rigorous drying is not necessary, and sometimes even undesirable, as small amounts of moisture often prove not to be harmful or may even lead to heightened activity, which can easily be established by experiment. Water physically bound to the support, however, must be removed completely. Suitable oxidic supports usually contain small amounts of chemically bound water, which are determined as the amount of OH groups per gram.

The porous supports which are used are with advantage subjected to a thermic treatment prior to the contacting of the supports with the organometallic compound. This treatment is carried out at a temperature of 100—1000°C, preferably 150—800°C. The temperature at which the support is heated is preferably chosen below the temperature at which the support material starts to sinter, in order to prevent a decrease of the pore volume and the specific area. The pressure at which the treatment is carried out and the atmosphere operated in are not critical. By preference, the treatment is conducted at atmospheric pressure and in an inert atmosphere. The duration of the heat treatment is not critical and generally amounts to 1—24 hours.

In this context, by organomagnesium compounds are understood magnesium compounds with at least one magnesium-carbon bond, such as magnesium dihydrocarbyl compound and magnesium alkoxyhydrocarbyl compounds.

Organomagnesium compounds preferably used are compounds having the formula $MgR_2$, where the symbols R are identical or different and each denotes a hydrocarbyl group with 1—30 carbon atoms. The group or groups denoted by R are alkyl radicals, aryl radicals, cycloalkyl radicals, aralkyl radicals, alkenyl radicals or alkadienyl radicals and preferably alkyl or cycloalkyl radicals. These radicals denoted by R need not all be identical.

Examples of magnesium compounds suitable for the process of the invention are diethyl magnesium, dipropyl magnesium, diisopropyl magnesium, dibutyl- or diisobutyl magnesium, ethylbutyl magnesium, diamyl magnesium, dihexyl magnesium, dioctyl magnesium etc., but also didecyl magnesium etc., or didodecyl magnesium, and dicycloalkyl magnesium compounds with identical or different cycloalkyl groups with 3—12 carbon atoms and preferably 5 or 6 carbon atoms. An alkyl and a cycloalkyl group may also be bonded to magnesium. Of the aromatic magnesium compounds, diphenyl magnesium is mentioned in particular. By preferance, a dialkyl magnesium with 1—10, in particular 4—10 carbon atoms in the alkyl group is employed. The organomagnesium compounds can be prepared according to the process of Dutch Patent Specification No. 139981 or according to any other suitable method for the preparation of ether-free solutions.

In the preparation of the catalyst component, the organomagnesium compound is preferably dissolved in inert solvents.

For the dissolution of the organomagnesium compound, a complexing organo compound of another metal, such as, in particular, aluminium alkyl and lithium alkyl compounds, can very suitable be used.

Normally, linear of branched aliphatic hydrocarbons, such as butanes, pentanes, hexanes, heptanes or mixtures including gasoline, kerosine, gas oil or other mineral oil fractions are used as solvents, but also cyclic hydrocarbons such as cyclopentane, cyclohexane, methylcyclohexane, and aromatic hydrocarbons. On a technical scale, aliphatic hydrocarbons are preferably used.

The solution of the organomagnesium compound is contacted with the inorganic material or with a suspension thereof, preferably at ambient temperature and with stirring for about 1 minute to 1 hour.

The solvent is separated off by decanting or evaporation, under vacuum if required.

The product of the reaction between the support material and the magnesium compound is subsequently heated at a temperature of 300—1000°C in a non-reducing atmosphere such as oxygen, air, nitrogen, carbon dioxide or a noble gas.

By preference, the atmosphere heated in is an oxidizing atmosphere, such as oxygen or air, air of reduced or increased oxygen content of course also forming an oxidizing atmosphere.

Preferably, the supported magnesium compound is heated at 400—800°C, more in particular at 500—600°C.

The heating periods may vary from a few seconds to tens of hours or more. At temperature of 500—600°C, the heating period can generally be 30 minutes to 6 hours.

The optimum heating period can easily be established by experiment by one skilled in the art, by preparing catalysts with identical compositions under conditions which are identical except for the heating periods, which are varied at a given heating temperature, and by determining the polymerization properties of the ultimate catalyst.

When the organo magnesium compound used is a dihydrocarbyl magnesium compound, it is recommendable to subject the product of the reaction between the support and the magnesium compound deposited on it[1] to a treatment whereby the hydrocarbyl groups are deactivated, prior to the heating treatment in a non-reducing atmosphere.

This may for instance be effected by reacting the product of the reaction of the support with the magnesium compound with oxygen or air under controlled conditions, or by reacting the product of the reaction of the support with the magnesium compound with an alcohol.

After the heating treatment in a non-reducing atmosphere and after cooling, the supported magnesium is combined with the titanium and/or vanadium compound(s).

The compounds preferably used according to the present invention are the titanium halides, in particular titanium tetrachloride, the titanium alkoxides or the titanium alkoxyhalides, the vanadium halides, such as $VCl_4$, vanadyl halides, such as $VCl_3$, and dialkoxyvanadium dihalides.

In the compounds, the transition metal should in most cases substantially be present in its highest valency. If titanium compounds are used, for example, minor amount of trivalent titanium can be present. If mixtures are used, the components incorporated therein are generally not subject to co-occurrence restrictions. Any halide or alkoxide or any mixed compound can also be used together with other ones. Further titanium iodide, which cannot generally be used as such, can in most cases be used in minor amounts beside other titanium compounds. In certain cases, this appears to have a favourable effect on the polymer properties. Besides titanium and/or vanadium compounds, compounds of other transition metals can be employed, in particular compounds of molybdenum, zirconium or chromium, such as $MoCl_5$, $ZrCl_4$, and chromiumn acetyl acetonate.

The amounts of magnesium compound and the amounts of transition metal compound(s) should be such that the solid catalyst component contains 0.5—10 per cent by weight of magnesium and 0.5—10 per cent by weight of transition metal(s).

The molar ratio of magnesium to transition metals can vary within wide limits. This ratio is not bounded in the higher region, but using a too excessive amount of magnesium generally does not offer advantage, and definite economic disadvantages of it soon become apparent. Said ratio will therefore normally amount to not more than 100. Preferably, the ratio lies between 0.1:1 and 20:1, in particular between 0.5:1 and 10:1.

The solid catalyst component obtained in the way described above is activated with an organo-aluminium compound, which is generally selected from the group of aluminium trialkyls, dialkylaluminium halides and alkylaluminium hydrides.

Instead of alkyl groups, also one or more unsaturated hydrocarbon radicals can be bonded to aluminium. Preferably, aluminium trialkyls are employed. The catalyst systems of the invention can be used for the polymerization of ethylene as well as propylene, butylene, pentene, hexylene, 4-methylpentene and other alpha-alkenes with at least 3 carbon atoms, but also mixtures thereof. They can also be used in the copolymerization of one or more alpha-alkenes with poly-unsaturated compounds. By preference ethylene is polymerized, whether or not with minor amounts of at most 20 mole % of another 1-alkene.

The polymerization can be carried out in a known way, for example by introducing the organoaluminium compound with which the catalyst is to be activated into a reactor into which a dispersant has been introduced. Next, the previously prepared catalyst is added, normally in such amounts that the amount of transition metal is 0.001—10 mmoles per litre and preferably 0.01—1 mmoles per litre. Then gaseous or liquid monomer is introduced. By polymerizing a mixture of monomers, copolymers can be prepared, poly-unsaturated monomers being also applicable. Also, even during the polymerization, activating organoaluminium compound can be added. This addition can be done continuously as well as intermittently. Optionally, the activation prior to the polymerization can be dispensed with, to activate during the polymerization only, or the other way round, but it is also possible to do both activations. Polymerization is preferably effected at temperatures below the melting point of the polymer, yielding a suspension of the polymer.

Obviously, if desired the polymerization can also be carried out at such temperatures that a solution of the polymer is obtained.

As a dispersant, to be used during the preparation of the catalyst as well as for the polymerization, any liquid which is inert relative to the catalyst system can be used, for example one or more saturated linear or branched aliphatic hydrocarbons, such as butanes, pentanes, hexanes, heptanes, pentamethylheptane or mineral oil fractions such as low-boiling or normal gasoline or naphtha, kerosine, gas oil; aromatic hydrocarbons such as benzene or toluene or halogenated aliphatic or aromatic hydrocarbons, for example tetrachlorethane. The polymerization can be carried out also in liquid monomer or in monomer in the supercritical fluid phase. Preferably, the aliphatic hydrocarbons or mixtures thereof, which are cheap, are used as solvents, in particular in polymerizations on a technical scale.

The polymer suspension obtained during the polymerization can be worked up in a known manner, the catalyst being deactivated first, after which the catalyst residues can be extracted with suitable solvents. The catalysts of the invention, however, are in most cases so active that the amount of catalyst in the polymer, in particular the transition metal content, is so low already that washing is unnecessary.

The polymerization can be carried out discontinuously or continuously, at atmospheric pressure but also at elevated pressure to about 2000 kg/cm². By carrying out the polymerization under pressure, the polymer yields can be further increased, which may help to prepare a polymer with very low catalyst residue contents. Preferably, polymerization is carried out at pressures of 1—100 kg/cm², more in particular 10—70 kg/cm². The process of the invention lends itself to known modifications. The molecular weight, for example, can be controlled by addition of hydrogen or other modifiers commonly used to this end. The polymerization can also be carried out in several stages arranged parallel or in series, using different catalyst compositions, temperatures, residence times, pressures, hydrogen concentrations etc. in these stages, if desired. Products may for example be prepared which have a wide molecular weight distribution that they have a high so-called flow index, by choosing, in one stage, such conditions, e.g. pressure, temperature and hydrogen concentrations as to yield a polymer of higher molecular weight, whilst choosing in another stage such conditions as to yield a product of lower molecular weight.

For the preparation of polymers having a wide molecular weight distribution, the polymerization can advantageously be carried out in two or more stages in which catalysts with different magnesium:transition-metal ratios are used. With the catalysts of the invention, 1-alkenes can also be polymerized in the gas phase, i.e. in the absence of a dispersant, in a known manner, for example according to the process described for a different catalyst composition in Dutch Patent Application No. 71 03231. The invention will be further explained by the following examples but is not restricted to them.

### Example I

112 grams of silica (EP-10, Messrs, Crosfield UK) dried for 4 hours at 200°C in a dry air stream was suspended in 400 ml dry heptane. To this suspension, 0.35 molar solution of di-n-butyl-magnesium was added drop-wise, until the heptane contained traces of alkyl. The amount of magnesium solution which could be added was 600 ml. The free alkyl residues were removed by washing with dry heptane. After removal of the heptane, the bound alkyl groups of the product obtained were deactivated by cautiously exposing the product to air.

30 grams of $SiO_2$ coated with magnesium in this way was calcined for 8 hours at 550°C in a dry air stream (7.5 Nl of air per hour). After cooling, the air was replaced by dry nitrogen. The calcined powder was suspended in 100 ml heptane. After addition of 25 ml pure $TiCl_4$ the solution was refluxed for another hour while being stirred. After cooling, the suspension was separated out by filtration and washed with dry heptane until no more Ti could be detected in the filtrate. The powder was dried in vacuum. By analyzing the dried powder for elements it was established that the catalyst contained 3.3 per cent by weight of magnesium and 3.5 per cent by weight of titanium.

### Comparative Example A

On the analogy of the process of Example I, di(n-butyl)magnesium was deposited on 30 g silica (EP-10). The excess dibutyl magnesium was removed by decanting and suspending in dry heptane a number of times. Eventually, the silica coated with dibutyl magnesium was suspended in about 100 ml heptane. With stirring, 25 ml undiluted $TiCl_4$ was now added dropwise, and the suspension was then boiled with reflux-cooling. The heptane was decanted, the impregnated silica was washed out with heptane and dried in vacuum. The dried silica contained 3.1 per cent magnesium and 2.7 per cent titanium.

### Example II

Into a stirred reactor (5 litres), 1.2 kg dry isobutane is introduced. After the contents of the reactor have been brought to a temperature of 91°C, hydrogen at 2.8 bar is forced in, and then ethylene, to a total pressure of 27 bar. Next, triethyl aluminium (TEA) is added, until the amount of aluminium in the polymerization medium is 25 ppm. Finally, 85 mg of the catalyst described in Example I is added. Polymerization is carried out for 155 minutes, the total pressure in the reactor being kept constant by forcing ethylene into the reactor. The contents of the reactor are maintained at 91°C throughout the polymerization.

The polyethylene yield is 334,000 grams per gram of Ti. The density of the polyethylene obtained is 961 kg/m$^3$. The melt index (ASTM D1238) is 8.74.

### Comparative Example B

Into a stirred reactor (5 litres), 1.2 kg dry isobutane is introduced. After the contents of the reactor have been brought to a temperature of 90°C, hydrogen at 8 bar is forced in, and then ethylene, to a total pressure of 34 bar. Next, triethyl aluminium (TEA) is added, until the amount of aluminium in the polymerization medium is 25 ppm. Finally, 190 mg of the catalyst described in Comparative Example A is added. Polymerization is carried out for 120 minutes, the total pressure in the reactor being kept constant by forcing ethylene into the reactor. The contents of the reaction vessel are maintained at 90°C throughout the polymerization.

The polyethylene yield is 59,700 grams per gram of Ti.

### Example III
### Copolymerization of Ethylene and Hexylene

Into a stirred reactor (5 litres), 1.2 kg dry isobutane and 300 grams of dry 1-hexylene are introduced. After the contents of the reactor have been brought to a temperature of 90°C, the reactor is pressurized with hydrogen at 1.5 bar, and then with ethylene, to a total pressure of 25 bar. Next, triethyl aluminium (TEA) is added, until the amount of aluminium in the polymerization medium is 25 ppm. Finally, 136 mg of the catalyst described in Example I is added. Polymerization is carried out for 140 minutes, the total pressure in the reactor being kept constant by forcing ethylene into the reactor. The contents of the reaction vessel are maintained at 90°C throughout the polymerization. No deposition of polymer is observed on the reactor wall, not even after a series of these polymerization tests.

The copolymer yield is 220,000 grams per gram of titanium.

The density of the copolymer obtained is 927 kg/m$^3$. The melt index (ASTM D1238) is 0.85.

### Example IV
### Copolymerization of Ethylene and Hexylene

Into a stirred reactor (5 litres), 1.2 kg dry isobutane and 470 grams of dry 1-hexylene are introduced. After the contents of the reactor have been raised to a temperature of 85°C, hydrogen at 0.8 bar is forced into the reactor, and next ethylene, to a total pressure of 20 bar. Next, triethyl aluminium (TEA) is added, to aluminium content in the polymerization medium of 250 ppm.

Finally, 129 ppm of a catalyst is added, which catalyst was made in the same way as in Example I except that ethylbutyl magnesium was used instead of dibutyl magnesium. The catalyst thus prepared contains 3.5 per cent by weight of magnesium and 4.3 per cent by weight of titanium. Polymerization is carried out for 65 minutes, the total pressure in the reactor being kept constant by forcing in ethylene. Throughout the polymerization, the contents of the reaction vessel are kept at 85°C. No polymer deposition on the reactor wall is observed, not even after a series of these polymerization tests.

The copolymer yield (LLDPE) is 155,00 grams per gram of titanium. The density of the copolymer obtained if 920 kg/m$^3$. The melt flow index (ASTM D1238) is 3.2.

### Claims

1. Process of preparing a catalyst component containing titanium and/or vanadium and magnesium for the polymerization of alkenes, by contacting an inert inorganic support with successively an organomagnesium compound and one or more compounds of the transition metals titanium and/or vanadium, the process being characterized in that the inorganic support material is combined with a solution of the organomagnesium compound, the reaction product obtained is subsequently heated at a temperature of 300—1000°C in a non-reducing atmosphere, and the support thus treated is then combined with the transition metal compounds or a solution thereof.

2. Process according to claim 1, characterized in that the support material used is a dried, finely dispersed and porous silica, alumina or a mixture thereof.

3. Process according to claim 1—2, characterized in that an organomagnesium compound is used which has the formula $MgR_2$, where the symbols R may be identical or different and each denotes a hydrocarbyl group with 1—30 carbon atoms.

4. Process according to claims 1—3, characterized in that the organomagnesium compound used is a dialkyl magnesium in which the alkyl groups are identical or different and contain 4—10 carbon atoms each.

5. Process according to claims 1—4, characterized in that the transition metal compound(s) used are halides, alkoxides or alkoxyhalides of titanium(IV) and/or vanadium(IV) or (V).

6. Process according to claims 1—4, characterized in that the transition metal compounds used are titanium tetrachloride, vanadium tetrachloride, vanadyl trichloride and/or dialkoxyvanadium dichlorides.

7. Process according to claim 1—6, characterized in that the catalyst component obtained contains 0.5 to 10 per cent by weight of magnesium.

8. Process according to claims 1—7, characterized in that the catalyst component obtained contains 0.5 to 10 per cent by weight of transition metal(s).

9. Process according to claims 1—8, characterized in that the molar ratio of the magnesium deposited on the support to the transition metals deposited on the support is between 0.1:1 and 20:1.

10. Process of polymerizing a 1-alkene with 2—8 carbon atoms, whether or not together with at most 15 mole % of one of more other 1-alkenes with 2—15 carbon atoms, characterized in that the catalyst used is a catalyst component prepared according to claims 1—9, whether or not activated with one or more organoaluminium compounds.

11. Process of preparing ethylene polymers by the polymerization of ethylene, whether or not together with at most 15 mole % of one or more 1-alkenes with 3—15 carbon atoms, characterized in that the catalyst used is a catalyst component prepared according to claims 1—9, whether or not activated with one or more organoaluminium compounds.

## Patentansprüche

1. Verfahren zur Herstellung einer Titan und/oder Vanadium und Magnesium enthaltenden Katalysatorkomponente für die Polymerisation von Alkenen, durch Kontaktieren eines inerten anorganischen Trägers mit, nacheinander, einer Organomagnesiumverbindung und einer oder mehreren Verbindungen der Übergangsmetalle Titan und/oder Vanadium, dadurch gekennzeichnet, daß das anorganische Trägermaterial mit einer Lösung der Organomagnesiumverbindung kombiniert, das erhaltene Reaktionsprodukt anschließend bei einer Temperatur von 300—1000°C in einer nicht reduzierenden Atmosphäre erhitzt und der so erhaltene Träger dann mit den Übergangsmetallverbindungen oder einer Lösung davon kombiniert wird.

2. Verfahren nach Anspruch 1, dadurch gekennzeichnet, daß das verwendete Trägermaterial ein getrocknetes, feinteiliges und poröses Siliciumdioxid, Aluminiumoxid oder ein Gemisch davon ist.

3. Verfahren nach den Ansprüchen 1—2, dadurch gekennzeichnet, daß eine Organomagnesiumverbindung der Formel $MgR_2$ verwendet wird, worin die Symbole R gleich oder verschieden sein können und jeweils eine Hydrocarbylgruppe mit 1—30 Kohlenstoffatomen beziechnen.

4. Verfahren nach den Ansprüche 1—3, dadurch gekennzeichnet, daß die Organomagnesiumverbindung ein Dialkylmagnesium ist, in welchem die Alkygruppen gleich oder verschieden sind und jeweils 4—10 Kohlenstoffatome enthalten.

5. Verfahren nach den Ansprüche 1—4, dadurch gekennzeichnet, daß die verwendeten Übergangsmetallverbindung(en) Halogenide, Alkoxide oder Alkoxyhalogenide von Titan (IV) und/oder Vanadium (IV) oder (V) sind.

6. Verfahren nach den Ansprüchen 1—4, dadurch gekennzeichnet, daß die verwendeten Übergangsmetallverbindungen Titantetrachlorid, Vanadiumtetrachlorid, Vanadyltrichlorid und/oder Dialkyloxyvanadiumdichloride sind.

7. Verfahren nach den Ansprüchen 1—6, dadurch gekennzeichnet, daß die erhaltene Katalysatorkomponente 0,5 bis 10 Gew.-% Magnesium enthält.

8. Verfahren nach den Ansprüchen 1—7, dadurch gekennzeichnet, daß die erhaltene Katalysatorkomponente 0,5 bis 10 Gew.-% Übergangsmetall(e) enthält.

9. Verfahren nach den Ansprüchen 1—8, dadurch gekennzeichnet, daß das molare Verhältnis des auf dem Träger abgelagerten Magnesiums zu den auf dem Träger abgelagerten Übergangsmetallen zwischen 0,1:1 und 20:1 beträgt.

10. Verfahren zum Polymerisieren eines 1-Alkens mit 2—8 Kohlenstoffatomen, gegebenenfalls zusammen mit höchstens 15 Mol-% eines oder mehrerer anderer 1-Alkene mit 2—15 Kohlenstoffatomen, dadurch gekennzeichnet, daß als Katalysator eine gemäß den Ansprüchen 1—9 hergestellte Katalysatorkomponente, gegebenenfalls mit einer oder mehreren Organoaluminiumverbindungen aktiviert, verwendet wird.

11. Verfahren zur Herstellung von Äthylenpolymeren durch Polymerisation von Äthylen, gegebenenfalls zusammen mit höchstens 15 Mol-% eines oder mehrerer anderer 1-Alkene mit 3—15 Kohlenstoffatomen, dadurch gekennzeichnet, daß als Katalysator eine gemäß den Ansprüchen 1—9 hergestellte Katalysatorkomponente, gegebenenfalls mit einer oder mehreren Organoaluminiumverbindungen aktiviert, verwendet wird.

## Revendications

1. Procédé de préparation d'un composant de catalyseur contenant du titane et/ou du vanadium et du magnésium pour la polymérisation des alcènes, consistant à mettre en contact un support minéral inerte successivement avec un composé organomagnésium et un ou plusieurs composés des métaux de transition, titane et/ou vanadium, le procédé étant caractérisé en ce que l'on combine la matière minérale support avec une solution du composé organo-magnésien, ou chauffe ensuite le produit de réaction obtenu à une température de 300 à 1000°C en atmosphère non réductrice et on combine ensuite le support ainsi traité avec les composés de métaux de transition ou une solution de ceux-ci.

2. Procédé selon la revendication 1, caractérisé en ce que la matière de support utilisée est une silice, alumine ou un mélange de silice et d'alumine séchées, finement dispersées et poreuses.

3. Procédé selon la revendication 1 ou 2, caractérisé en ce qu'on utilise un composé organomagnésien de formule $MgR_2$ dans laquelle les radicaux R peuvent être identiques ou différents et chacun désigne un groupe hydrocarbyle de 1 à 30 atomes de carbone.

4. Procédé selon les revendications 1 à 3, caractérisé en ce que le composé organo-magnésien utilisé est une dialkylmagnésium dans lequel les groupes alkyle sont identiques ou différents et contiennent de 4 à 10 atomes de carbone chacun.

5. Procédé selon la revendications 1 à 4, caractérisé en ce que le ou les composé(s) de métaux de transition est (sont) des halogènures, alcoolates ou alcoxy-halogénures de titane (IV) et/ou de vanadium (IV) ou (V).

6. Procédé selon les revendications 1 à 4, caractérisé en ce que les composés de métaux de transition sont le tétrachlorure de titane, le tétrachlorure de vanadium, le trichlorure de vanadyle et/ou les dichlorures de dialcoxy-vanadium.

7. Procédé selon les revendications 1 à 6, caractérisé en ce que le composant de catalyseur obtenu contient 0,5 à 10 % en poids de magnésium.

8. Procédé selon la revendications 1 à 7, caractérisé en ce que le composant de catalyseur obtenu contient 0,5 à 10 % en poids d'un ou plusieurs métaux de transition.

9. Procédé selon les revendications 1 à 8, caractérisé en ce que le rapport molaire du magnésium déposé sur le support aux métaux déposés sur le support est compris entre 0,1:1 et 20:1.

10. Procédé de polymérisation d'un 1-alcène de 2 à 8 atomes de carbone éventuellement avec un maximum de 15 mole % d'un ou plusieurs autres 1-alcènes de 2 à 15 atomes de carbone, caractérisé en ce que le catalyseur utilisé est un composant de catalyseur préparé selon les revendications 1 à 9 avec un sans activation par un ou plusieurs composés d'organo-aluminium.

11. Procédé de préparation de polymères d'éthylène par polymérisation d'éthylène, avec ou sans un maximum de 15 moles % d'un ou plusieurs 1-alcènes de 3 à 15 atomes de carbone, caractérisé en ce que le catalyseur utilisé est un composant de catalyseur préparé selon les revendications 1 à 9, avec ou sans activation par un ou plusieurs composés d'organo-aluminium.